# EUROPÄISCHE PATENTSCHRIFT

(11) **EP 3 144 648 B1**
(45) Veröffentlichungstag und Bekanntmachung des Hinweises auf die Patenterteilung: **12.09.2018**
(21) Anmeldenummer: 16184262.0
(22) Anmeldetag: 16.08.2016
(51) Int. Cl.: G01J 1/04, G01J 1/42, G01J 1/06, G01J 1/02

(54) **OPTISCHE SENSORVORRICHTUNG FÜR EIN KRAFTFAHRZEUG, FAHRERASSISTENZSYSTEM SOWIE KRAFTFAHRZEUG**
OPTICAL SENSOR DEVICE FOR A MOTOR VEHICLE, DRIVER ASSISTANCE SYSTEM AND MOTOR VEHICLE
DISPOSITIF DE CAPTEUR OPTIQUE DE VÉHICULE AUTOMOBILE, SYSTÈME D'ASSISTANCE DU CONDUCTEUR ET VÉHICULE AUTOMOBILE

(30) Priorität: 24.08.2015 DE 102015113990
(43) Veröffentlichungstag der Anmeldung: 22.03.2017
(73) Patentinhaber: Valeo Schalter und Sensoren GmbH, 74321 Bietigheim-Bissingen (DE)
(72) Erfinder: Henz, Dieter, 74321 Bietigheim-Bissingen (DE)

(56) Entgegenhaltungen:
- WO-A1-2004/113853
- CN-A- 104 340 005
- DE-A1- 3 922 153
- DE-C1- 4 225 512
- DE-C1- 4 329 665
- US-A1- 2007 023 609

## Beschreibung

Die Erfindung betrifft eine optische Sensorvorrichtung für ein Kraftfahrzeug zum Bestimmen einer, auf einen sich innerhalb des Kraftfahrzeugs befindlichen Fahrer treffenden Strahlungsleistung von Sonnenstrahlung, mit einem lichtsensitiven Empfangselement zum Erfassen der Strahlungsleistung, wobei das lichtsensitive Empfangselement für einen vorbestimmten Einfallswinkelbereich der Sonnenstrahlung eine einfallswinkelabhängige Sensitivität aufweist, und mit einer optisch abbildenden Einrichtung zum Transmittieren der Sonnenstrahlung auf das lichtsensitive Empfangselement. Die Erfindung betrifft außerdem ein Fahrerassistenzsystem sowie ein Kraftfahrzeug.

Es ist bereits aus dem Stand der Technik bekannt, optische Sensorvorrichtungen, sogenannte Sonnenstandssensoren, beispielsweise an Windschutzscheiben von Kraftfahrzeugen anzuordnen, um eine Strahlungsleistung von Sonnenstrahlung auf eine Person in einem Innenraum des Kraftfahrzeugs, beispielsweise auf einen Fahrer des Kraftfahrzeugs, zu erfassen. Sonnenstandssensoren dienen insbesondere dazu, ein Aufheizen des Innenraumes durch die in den Innenraum einfallende Sonnenstrahlung zu erfassen. Basierend auf dem von dem Sonnenstandssensor erfassten Aufheizen des Innenraums kann beispielsweise eine Klimatisierungseinrichtung zum Klimatisieren des Innenraums angesteuert werden, um beispielsweise eine Temperatur in dem Innenraum des Kraftfahrzeugs konstant auf einem von dem Fahrer voreingestellten Wert zu halten. Solche Sonnenstandssensoren sind beispielsweise aus der DE 102 56 645 A1 und der EP 1 216 863 A2 bekannt.

Sonnenstandssensoren weisen in der Regel den Nachteil auf, dass eine Sensitivität der Sensorvorrichtung abhängig von einem Einfallswinkel der Sonnenstrahlung ist. Die optischen Sensorvorrichtungen weisen also eine nicht isotrope Richtcharakteristik auf. So kann es beispielsweise vorkommen, dass von der optischen Sensorvorrichtung, trotz gleicher, von der Sonne abgestrahlter Strahlungsleistung, für verschiedene Einfallswinkel der Sonnenstrahlung verschiedene Strahlungsleistungswerte erfasst werden. Zum Einstellen einer Richtcharakteristik eines optischen Sensors schlägt die US 8 338 774 B2 beispielsweise vor, Licht aus bestimmten Einfallswinkeln zu blockieren.

Es ist Aufgabe der vorliegenden Erfindung, eine optische Sensorvorrichtung zu realisieren, mittels welcher eine Strahlungsleistung von Sonnenstrahlung besonders genau und zuverlässig erfasst werden kann.
Diese Aufgabe wird erfindungsgemäß durch eine optische Sensorvorrichtung, ein Fahrerassistenzsystem sowie ein Kraftfahrzeug mit den Merkmalen gemäß Patentanspruch 1 gelöst. Eine erfindungsgemäße optische Sensorvorrichtung für ein Kraftfahrzeug dient zum Bestimmen einer auf einen sich innerhalb des Kraftfahrzeugs befindlichen Fahrer treffenden Strahlungsleistung von Sonnenstrahlung. Die optische Sensorvorrichtung umfasst ein lichtsensitives Empfangselement zum Erfassen der Strahlungsleistung, wobei das lichtsensitive Empfangselement für Sonnenstrahlung aus einem vorbestimmten Einfallswinkelbereich eine einfallswinkelabhängige Sensitivität aufweist. Die optische Sensorvorrichtung umfasst außerdem eine optisch abbildende Einrichtung zum Transmittieren der Sonnenstrahlung auf das lichtsensitive Empfangselement. Darüber hinaus ist die optisch abbildende Einrichtung dazu ausgelegt, die Strahlungsleistung der aus dem vorbestimmten Einfallswinkelbereich auf die optisch abbildende Einrichtung fallenden Sonnenstrahlung zum Kompensieren der einfallswinkelabhängigen Sensitivität des lichtsensitiven Empfangselementes beim Transmittieren einfallswinkelabhängig zu verändern, sodass die nach dem Transmittieren von dem lichtsensitiven Empfangselement erfasste Strahlungsleistung innerhalb des vorbestimmten Einfallswinkelbereiches einfallswinkelunabhängig ist.
Die optische Sensorvorrichtung ist insbesondere als ein Sonnenstandssensor ausgebildet und kann beispielsweise an einer Windschutzscheibe des Kraftfahrzeugs angebracht sein. Der Sonnenstandssensor dient zum Bestimmen der Strahlungsleistung der Sonnenstrahlung, welche aus dem vorbestimmten Einfallswinkelbereich aus einem Umgebungsbereich des Kraftfahrzeugs auf den Fahrer trifft. Anders ausgedrückt bedeutet dies, dass der Sonnenstandssensor zum Bestimmen einer von dem Fahrer wahrgenommenen Bestrahlungsstärke dient. Insbesondere erfasst der Sonnenstandssensor dazu einen infraroten Anteil der Sonnenstrahlung, welchen der Fahrer als Wärme wahrnimmt. Der Einfallswinkelbereich ist dabei insbesondere so gewählt, dass der Fahrer eine Strahlungsleistung aus diesem Einfallswinkelbereich unabhängig von einem Einfallswinkel der Sonnenstrahlung wahrnimmt. Mit anderen Worten bedeutet dies, dass für jeden Einfallswinkel der Sonnenstrahlung aus dem vorbestimmten Einfallswinkelbereich die gleiche Strahlungsleistung auf den Fahrer trifft. Zum Erfassen der Strahlungsleistung umfasst der Sonnenstandssensor das lichtsensitive Empfangselement, welches beispielsweise als eine Fotodiode ausgebildet sein kann. Aus der von dem Empfangselement erfassten Strahlungsleistung kann die den Fahrer treffende Strahlungsleistung bestimmt werden. Die Sensitivität des lichtsensitiven beziehungsweise lichtempfindlichen Empfangselements ist dabei einfallswinkelabhängig, also abhängig von einem Einfallswinkel der Sonnenstrahlung. Mit anderen Worten bedeutet dies, dass die von dem Empfangselement erfasste Strahlungsleistung abhängig ist von einer Einfallsrichtung, aus welcher die Sonnenstrahlung aus dem Umgebungsbereich auf das Empfangselement auftrifft. Das Empfangselement weist also einfallswinkelspezifische Sensitivitätswerte auf. Durch die einfallswinkelabhängige Sensitivität weist das lichtsensitive Empfangselement eine über den vorgegebenen Einfallswinkelbereich ungleichmäßige Richtcharakteristik auf.

Die Richtcharakteristik beschreibt die Winkelabhängigkeit der erfassten Strahlungsleistung bezogen auf die Sensitivität des Empfangselementes für einen Referenzeinfallswinkel und kann quantitativ durch den sogenannten Richtfaktor ausgedrückt werden. Der die Richtcharakteristik beschreibende Richtfaktor kann also über das Verhältnis beziehungsweise den Quotienten zwischen der aus einem beliebigen Einfallswinkel des Einfallswinkelbereiches erfassten Strahlungsleistung und der aus dem Referenzeinfallswinkel erfassten Strahlungsleistung bestimmt werden. Der Referenzeinfallswinkel kann beispielsweise so gewählt werden, dass das Empfangselement für diesen Referenzeinfallswinkel die maximale Sensitivität aufweist. Bei der maximalen Sensitivität kann das Empfangselement beispielsweise zwischen 90% und 100%, insbesondere 100%, der von der Sonne abgestrahlten Strahlungsleistung erfassen. Bei dem Referenzeinfallswinkel fällt die Sonnenstrahlung insbesondere senkrecht auf die lichtsensitive Fläche des Empfangselementes. Damit kann der Richtfaktor insbesondere als der Quotient aus der einfallswinkelabhängigen, von dem Empfangselement erfassten Strahlungsleistung und der von der Sonne abgestrahlten Strahlungsleistung beschrieben werden. Wenn der Quotient für alle Einfallswinkel aus dem vorbestimmten Einfallswinkelbereich den gleichen Wert liefert, so liegt eine isotrope Richtcharakteristik vor.

Da die Sensitivität des Empfangselementes einfallswinkelabhängig ist, unterscheiden sich die von dem Empfangselement erfassten Strahlungsleistungen innerhalb des Einfallswinkelbereiches. Die Richtcharakteristik des Empfangselementes ist also ungleichmäßig beziehungsweise nicht isotrop. Aufgrund dieser ungleichmäßigen Richtcharakteristik, also aufgrund der einfallswinkelabhängigen Sensitivität, kann aus der erfassten Strahlungsleistung die den Fahrer treffende Strahlungsleistung der Sonnenstrahlung, also die vom Fahrer wahrgenommene Bestrahlungsstärke, nicht korrekt bestimmt werden. So ist beispielsweise die von dem Empfangselement erfasste Strahlungsleistung der Sonnenstrahlung, welche aus einem ersten Einfallswinkel des Einfallswinkelbereiches auf das Empfangselement trifft, bei welchem das Empfangselement eine niedrige Sensitivität aufweist, kleiner als die Strahlungsleistung der Sonnenstrahlung, welche aus einem zweiten Einfallswinkel des Einfallswinkelbereiches auf das Empfangselement trifft, bei welchem das Empfangselement eine höhere Sensitivität aufweist.

Zum Kompensieren der einfallswinkelabhängigen Sensitivität, also zum Einstellen einer gleichmäßigen, isotropen Richtcharakteristik für die optische Sensorvorrichtung innerhalb des vorbestimmten Einfallswinkelbereiches, umfasst die optische Sensorvorrichtung die optisch abbildende Einrichtung, welche beispielsweise als eine Linse ausgebildet sein kann. Die optisch abbildende Einrichtung ist zwischen dem Umgebungsbereich und dem lichtsensitiven Empfangselement angeordnet. Die optisch abbildende Einrichtung weist eine Oberseite auf, auf welche die Sonnenstrahlung beziehungsweise das Licht aus dem Umgebungsbereich auftrifft. Die Oberseite kann beispielsweise optisch mit der Windschutzscheibe des Kraftfahrzeugs gekoppelt sein. Eine der Oberseite gegenüberliegende Unterseite der optisch abbildenden Einrichtung ist dem lichtsensitiven Empfangselement zugewandt. Die optisch abbildende Einrichtung transmittiert die Sonnenstrahlung aus dem Umgebungsbereich auf das lichtsensitive Empfangselement.

Die optisch abbildende Einrichtung ist zum Verändern der Strahlungsleistung beziehungsweise zum Verändern einer Strahlungsintensität der Sonnenstrahlung beim Transmittieren durch die optisch abbildende Einrichtung ausgebildet. Anders ausgedrückt bedeutet dies, dass die optisch abbildende Einrichtung die Bestrahlungsstärke des Empfangselements einstellen kann. Die Bestrahlungsstärke des Empfangselements ist dabei die Strahlungsleistung, welche nach dem Transmittieren durch die optisch abbildende Einrichtung auf eine lichtsensitive Fläche des Empfangselements trifft. Die transmittierte Strahlungsleistung, welche auf das lichtsensitive Empfangselement trifft, weist also einen von der durch die Sonne ausgesendeten Strahlungsleistung unterschiedlichen, einfallswinkelabhängigen Wert auf. Die optisch abbildende Einrichtung ist also dazu ausgelegt, die Strahlungsleistung beziehungsweise Strahlungsintensität der Sonnenstrahlung aus dem ersten Einfallswinkel beim Transmittieren zu verstärken, sodass die transmittierte Strahlungsleistung beziehungsweise Strahlungsintensität einen ersten Wert aufweist und/oder die Strahlungsleistung beziehungsweise Strahlungsintensität der Sonnenstrahlung aus dem zweiten Einfallswinkel beim Transmittieren abzuschwächen, sodass die transmittierte Strahlungsleistung beziehungsweise Strahlungsintensität einen im Vergleich zu ersten Wert kleineren zweiten Wert aufweist. Dies hat zur Folge, dass innerhalb des vorbestimmten Einfallswinkelbereichs die von dem Empfangselement erfasste Strahlungsleistung einen im Wesentlichen einheitlichen Wert aufweist. Es sind also bei der Erfindung die auf die optische Einrichtung treffende Strahlungsleistung, die Strahlungsleistung nach dem Transmittieren und die von dem Empfangselement erfasste Strahlungsleistung zu unterscheiden. Durch das Kompensieren der einfallswinkelabhängigen Sensitivität ist der die Richtcharakteristik beschreibende Quotient aus der erfassten Strahlungsleistung und der Strahlungsleistung bei dem Referenzeinfallswinkel innerhalb des vorbestimmten Einfallswinkelbereiches konstant. Die Richtcharakteristik ist also für den vorbestimmten Einfallswinkelbereich isotrop. Anhand der erfassten Strahlungsleistung und der Richtcharakteristik beziehungsweise des eingestellten Richtfaktors kann nun die den Fahrer treffende Strahlungsleistung in vorteilhafter Weise korrekt bestimmt werden.

Auch kann zumindest ein weiterer Einfallswinkelbereich vorgegeben werden, wobei die optisch abbildende Einrichtung dazu ausgelegt ist, für jeden der vorbestimmten Einfallswinkelbereiche eine über den jeweiligen Einfallswinkelbereich isotrope, einfallswinkelbereichspezifische Richtcharakteristik vorzugeben.

Vorzugsweise weist der vorbestimmte Einfallswinkelbereich einen vorbestimmten Horizontalwinkelbereich und einen vorbestimmten Vertikalwinkelbereich auf, wobei die optisch abbildende Einrichtung dazu ausgelegt ist, die Strahlungsleistung der aus dem vorbestimmten Einfallswinkelbereich auf die optisch abbildende Einrichtung fallenden Sonnenstrahlung beim Transmittieren horizontalwinkelabhängig und vertikalwinkelabhängig zu verändern, sodass die von dem lichtsensitiven Empfangselement erfasste Strahlungsleistung horizontalwinkelunabhängig und vertikalwinkelunabhängig ist.

Ein Horizontalwinkel beziehungsweise ein Azimutalwinkel ist hier ein Winkel, welchen die Sonne in einer waagrechten Ebene, beispielsweise in einer von einer Fahrzeuglängsachse und einer Fahrzeugquerachse aufgespannten Ebene, bezogen auf eine Fahrzeuglängsachse aufweist. Ein Vertikalwinkel beziehungsweise Höhenwinkel beziehungsweise Elevationswinkel ist hier ein Winkel, welchen die Sonne in einer senkrechten Ebene, beispielsweise in einer von der Fahrzeuglängsachse und einer Fahrzeughochachse aufgespannten Ebene, bezogen auf den Horizont aufweist. Durch den Vertikalwinkel und den Horizontalwinkel der Sonne kann ein Sonnenstand der Sonne, also eine Position der Sonne über dem Horizont an einem Standort des Kraftfahrzeugs, angegeben werden. Der vorbestimmte Einfallswinkelbereich umfasst nun zumindest zwei Einfallswinkel der Sonnenstrahlung, die Vertikalwinkelkomponenten der zumindest zwei Einfallswinkel und/oder die Horizontalwinkelkomponenten der zumindest zwei Einfallswinkel unterschiedlich sind. Die Horizontalwinkelkomponenten der Einfallswinkel bilden also den Horizontalwinkelbereich des Einfallswinkelbereichs und die Vertikalwinkelkomponenten der Einfallswinkel den Vertikalwinkelbereich des Einfallswinkelbereiches.

Dabei ist als der Horizontalwinkelbereich bevorzugt ein Winkelbereich zwischen -45° und + 90° bezogen auf eine Fahrzeuglängsachse vorgegebe n. Als der vorbestimmte Vertikalwinkelbereich ist vorzugsweise ein Winkelbereich zwischen5°und 50°bezogen auf den Horizont vorgegeben.

Die optisch abbildende Einrichtung ist nun dazu ausgelegt, die Strahlungsleistung beim Transmittieren so anzupassen, dass die von dem Empfangselement empfangene Strahlungsleistung innerhalb des vorbestimmten Horizontalwinkelbereiches unabhängig von dem Horizontalwinkel und innerhalb des vorbestimmten Vertikalwinkelbereiches unabhängig von dem Vertikalwinkel der Sonnenstrahlung ist. Anders ausgedrückt bedeutet dies, dass die von dem Empfangselement erfasste Strahlungsleistung in dem Einfallswinkelbereich nicht horizontalwinkelabhängig und nicht vertikalwinkelabhängig ist. Die optisch abbildende Einrichtung ist vorzugsweise also dazu ausgelegt, für jeden vorgegebenen Einfallswinkelbereich die Strahlungsleistung der aus dem jeweiligen vorbestimmten Einfallswinkelbereich auf die optisch abbildende Einrichtung fallenden Sonnenstrahlung beim Transmittieren horizontalwinkelabhängig und vertikalwinkelabhängig zu verändern, sodass die von dem lichtsensitiven Empfangselement erfasste Strahlungsleistung horizontalwinkelunabhängig und vertikalwinkelunabhängig ist. So kann für jeden Einfallswinkelbereich ein für diesen Einfallswinkelbereich spezifischer Strahlungsleistungswert erfasst werden.

Innerhalb des vorbestimmten Einfallswinkelbereiches trifft die Sonnenstrahlung den Fahrer beispielsweise besonders stark. Wenn bei Vertikalwinkeln von beispielsweise 5° und 30°bezogen auf den Horizont der Horizontalwink el 0°bezogen auf die Fahrzeuglängsachse beträgt, so fällt die Sonnenstrahlung frontal durch die Windschutzscheibe auf den Fahrer. Wenn bei Vertikalwinkeln von 5°und 30° der Horizontalwinkel 90°beträgt, so fällt die Sonnenst rahlung durch eine fahrerseitige Seitenscheibe auf den Fahrer. Die den Fahrer treffende Strahlungsleistung ist also in beiden Fällen in etwa gleich. In dem Einfallswinkelbereich, welcher diese Horizontalwinkel und Vertikalwinkel umfasst, soll die Strahlungsleistung also winkelunabhängig erfasst werden. Wenn der Horizontalwinkel beispielsweise -90°beträgt, so trifft bei Vertikalwinkeln von beispielsweise 5°und 30°die So nnenstrahlung weniger den Fahrer, sondern durch ein Beifahrerfenster des Kraftfahrzeugs einen Beifahrer. Die den Fahrer treffende Strahlungsleistung ist also geringer. Dies kann von dem Sonnenstandssensor erfasst werden.
Wenn der Vertikalwinkel beispielsweise 90°beträgt, so wird bei Horizontalwinkeln von 0° und 90°die Sonnenstrahlung nahezu vollständig von einem Dach des Kraftfahrzeugs blockiert. Die den Fahrer treffende Strahlungsleistung ist also ebenfalls geringer. Dies kann von dem Sonnenstandssensor erfasst werden.

Gemäß einer Ausführungsform der Erfindung weist die optisch abbildende Einrichtung einen ersten Transmissionsbereich zum Transmittieren der Sonnenstrahlung aus einem ersten Teilbereich des Einfallswinkelbereiches auf, welchem ein erster Sensitivitätswert zugeordnet ist. Außerdem weist die optisch abbildende Einrichtung zumindest einen zweiten Transmissionsbereich zum Transmittieren der Sonnenstrahlung aus einem zweiten Teilbereich des Einfallswinkelbereiches auf, welchem ein gegenüber dem ersten Sensitivitätswert größerer zweiter Sensitivitätswert zugeordnet ist. Die optisch abbildende Einrichtung ist dazu ausgelegt, die Strahlungsleistung der Sonnenstrahlung aus dem ersten Teilbereich beim Transmittieren durch den ersten Transmissionsbereich zu verstärken und die Strahlungsleistung der Sonnenstrahlung aus dem zweiten Teilbereich beim Transmittieren durch den zweiten Transmissionsbereich abzuschwächen.
Die optisch abbildende Einrichtung weist also zumindest zwei Transmissionsbereiche auf, wobei jedem Transmissionsbereich dabei ein Teilbereich des Einfallswinkelbereiches zugeordnet ist. Jeder Transmissionsbereich transmittiert insbesondere nur die aus dem zugeordneten Teilbereich auf die optisch abbildende Einrichtung treffende Sonnenstrahlung. Jedem Teilbereich ist dabei zumindest ein Einfallswinkel der Sonnenstrahlung zugeordnet. Dabei wird die Strahlungsintensität, also Bestrahlungsstärke des Empfangselementes, für Sonnenstrahlung aus dem ersten Teilbereich durch die optisch abbildende Einrichtung verstärkt und/oder die Strahlungsintensität, also die Bestrahlungsstärke des Empfangselementes, für Sonnenstrahlung aus dem zweiten Teilbereich durch die optisch abbildende Einrichtung höchstens abgeschwächt. Somit können die Werte der von dem Empfangselement erfassten Strahlungsleistung durch Bereitstellen der zumindest zwei Transmissionsbereiche einfach und aufwandsarm aneinander angeglichen werden, sodass das Empfangselement für Sonnenstrahlung aus jedem Einfallswinkel innerhalb des vorbestimmten Einfallswinkelbereiches den gleichen Wert für die Strahlungsleistung erfasst.

Vorzugsweise weist dazu der erste Transmissionsbereich der optisch abbildenden Einrichtung einen ersten Transmissionsgrad auf und der zumindest eine zweite Transmissionsbereich einen gegenüber dem ersten Transmissionsgrad verringerten zweiten Transmissionsgrad. Der Transmissionsgrad ist ein Maß für die Durchlässigkeit der optisch abbildenden Einrichtung für die Sonnenstrahlung und kann Werte zwischen 0 und 1 annehmen. Der Transmissionsgrad beschreibt hier ein Verhältnis zwischen der Strahlungsleistung nach dem Transmittieren und der Strahlungsleistung vor dem Transmittieren. Beispielsweise kann erste Transmissionsbereich einen Transmissionsgrad von 1 aufweisen, sodass die Strahlungsleistung nach dem Transmittieren der Strahlungsleistung vor dem Transmittieren entspricht. Der zweite Transmissionsbereich kann einen Transmissionsgrad, welcher größer als 0, aber kleiner als 1 ist, aufweisen, sodass die Strahlungsleistung nach dem Transmittieren kleiner als die Strahlungsleistung vor dem Transmittieren ist. Durch das vorgeben von unterschiedlichen Transmissionsgraden für die optisch abbildende Einrichtung kann besonders einfach und ohne Bereitstellen weiterer Bauteile die Strahlungsleistung nach dem Transmittieren eingestellt werden.

Eine vorteilhafte Ausführungsform der Erfindung sieht vor, dass die optisch abbildende Einrichtung auf einer Oberseite, über welche die Sonnenstrahlung die optisch abbildende Einrichtung betritt, und/oder auf einer dem lichtsensitiven Empfangselement zugewandten Unterseite in dem ersten Transmissionsbereich zum Bereitstellen des ersten Transmissionsgrades eine erste Oberflächenrauheit aufweist und in dem zumindest einen zweiten Transmissionsbereich zum Bereitstellen des zweiten Transmissionsgrades eine gegenüber der ersten Oberflächenrauheit vergrößerte zweite Oberflächenrauheit aufweist. In einer bestimmungsgemäßen Einbaulage der optischen Sensorvorrichtung ist die Oberseite einer lichtdurchlässigen Scheibe, beispielsweise der Windschutzscheibe, des Kraftfahrzeugs zugewandt, insbesondere optisch mit der Scheibe gekoppelt. Durch die Oberflächenrauheit der optisch abbildenden Einrichtung wird die Sonnenstrahlung beim Transmittieren gestreut. Damit können bestimmte Bereiche des Spektrums der Sonnenstrahlung abgeschwächt werden. Je größer dabei die Oberflächenrauheit ist, desto stärker werden die Sonnenstrahlen gestreut und desto geringer werden die Strahlungsintensität und damit die Bestrahlungsstärke des Empfangselementes. Durch Vorgeben verschiedener Rauhigkeitsklassen kann ein starker oder ein geringer Effekt der Abschwächung realisiert werden. Somit sind die Transmissionsgrade durch Vorgeben verschiedener Rauhigkeitsgrade für die Oberfläche besonders einfach und platzsparend einstellbar.

Vorzugsweise ist die Oberseite und/oder die Unterseite der optisch abbildenden Einrichtung in dem ersten Transmissionsbereich glatt poliert und in dem zumindest einen zweiten Transmissionsbereich aufgeraut. Die optisch abbildende Einrichtung kann beispielsweise mittels eines Spritzgussverfahrens hergestellt werden. Während der Herstellung können die Oberflächen, also die Oberseite und/oder die Unterseite der optisch abbildenden Einrichtung, spiegelpoliert werden. Zum Bereitstellen der Oberflächenrauheit können Teile der Oberfläche, also die Oberfläche in dem zweiten Transmissionsbereich, mit hoher Genauigkeit, beispielsweise 0,02 mm, erodierrau hergestellt werden. Die erodierrauen Oberflächen können während des Herstellungsprozesses oder durch nachträgliche Bearbeitung der Oberflächen, beispielsweise Ätzen der Oberfläche, ausgebildet werden. Durch den Einsatz mehrerer Elektroden bei dem Fertigungsverfahren können verschiedene Oberflächenrauheiten hergestellt werden. Diese erodierrauen Oberflächen schwächen die Sonnenstrahlen ab. Dabei kann eine geometrische Form und/oder ein Muster und/oder eine Lage beziehungsweise eine Position und/oder eine Größe der erodierrauen Bereiche, also des zweiten Transmissionsbereiches, frei gewählt werden. Beispielsweise können die erodierrauen Bereiche als wabenförmige beziehungsweise sechseckige Flächenelemente in der Oberseite und/oder in der Unterseite der optisch abbildenden Einrichtung ausgebildet sein. Insbesondere sind die zweiten, aufgerauten Transmissionsbereiche derart in der Oberseite und/oder der Unterseite ausgebildet, dass die zweiten Transmissionsbereiche unmittelbar angrenzend an den ersten, insbesondere glatt polierten Transmissionsbereich ausgebildet sind. Auch ist ein Flächeninhalt der zweiten Transmissionsbereiche insbesondere kleiner als ein Flächeninhalt des ersten Transmissionsbereiches.

Auch kann es vorgesehen sein, dass ein Rand eines der Transmissionsbereiche ausgefranst ist, sodass ein sanfterer Übergang zwischen zwei Transmissionsbereichen entsteht. Anders ausgedrückt bedeutet dies, dass ein Übergang der Transmissionsgrade stetig verläuft. Durch die Ausgestaltung der Transmissionsbereiche kann beispielsweise die Richtcharakteristik des Empfangselementes kundenspezifisch eingestellt werden, indem durch die geometrische Form und/oder die Lage und/oder die Größe der Transmissionsbereiche Teilbereiche des Einfallswinkelbereiches festgelegt werden, für welche die transmittierte Strahlungsleistung verändert werden soll. Die optische Sensorvorrichtung ist also besonders flexibel gestaltet.

Der Erfindung entsprechend ist vorgesehen, dass die optisch abbildende Einrichtung als eine Linse ausgebildet ist, wobei eine Oberseite, über welche die Sonnenstrahlung in die Linse eintritt, und/oder eine dem lichtsensitiven Empfangselement zugewandte Unterseite der Linse als eine Freiformfläche ausgebildet ist, durch welche in dem ersten Transmissionsbereich die Linse als eine Sammellinse ausgebildet ist und in dem zumindest einen zweiten Transmissionsbereich die Linse als eine Streulinse ausgebildet ist. Die Freiformflächen können in der Oberseite und/oder in der Unterseite in dem zweiten Transmissionsbereich konkave Krümmungen zum Ausbilden der Zerstreuungslinse aufweisen und in dem ersten Transmissionsbereich konvexe Krümmungen zum Ausbilden der Sammellinse aufweisen. Durch die Sammellinsen können zum Verstärken der Bestrahlungsstärke des Empfangselementes Sonnenstrahlen aus einem Einfallswinkel, bei welchem das Empfangselement eine niedrige Sensitivität aufweist, auf das Empfangselement fokussiert werden. Durch die Streulinsen können zum Abschwächen der Bestrahlungsstärke des Empfangselementes Sonnenstrahlen, welche aus einem Einfallswinkel, bei welchem das Empfangselement eine hohe Sensitivität aufweist, gestreut werden.
Vorzugsweise weist die Sensorvorrichtung zum Bestimmen einer, auf einen sich innerhalb des Kraftfahrzeugs befindlichen Beifahrer treffenden Strahlungsleistung von Sonnenstrahlung ein weiteres lichtsensitives Empfangselement zum Erfassen der Strahlungsleistung und eine weitere optisch abbildende Einrichtung auf, wobei das weitere lichtsensitive Empfangselement eine einfallswinkelabhängige Sensitivität aufweist. Die weitere optisch abbildende Einrichtung ist dazu ausgelegt, die Strahlungsleistung zum Kompensieren der einfallswinkelabhängigen Sensitivität des weiteren lichtsensitiven Empfangselementes beim Transmittieren einfallswinkelabhängig zu verändern, sodass die nach dem Transmittieren von dem lichtsensitiven Empfangselement erfasste Strahlungsleistung innerhalb des vorbestimmten weiteren Einfallswinkelbereiches einfallswinkelunabhängig ist.
Dies bedeutet, dass das Empfangselement dem Fahrer zugeordnet ist und die den Fahrer treffende Strahlungsleistung erfasst und das weitere Empfangselement dem Beifahrer zugeordnet ist und die den Beifahrer treffende Strahlungsleistung erfasst. Die weitere optisch abbildende Einrichtung kann zum Verändern der Strahlungsleistung beim Transmittieren gleich der ersten optisch abbildenden Einrichtung ausgebildet sein. Die den Fahrer und den Beifahrer treffenden Strahlungsleistungen können also getrennt erfasst werden und beispielsweise einem Fahrerassistenzsystem des Kraftfahrzeugs bereitgestellt werden, welches daraufhin den Innenraum des Kraftfahrzeugs in Abhängigkeit von der erfassten Strahlungsleistung klimatisiert. Insbesondere können ein fahrerseitiger Teilbereich und ein beifahrerseitiger Teilbereich des Innenraums separat klimatisiert werden, beispielsweise durch Ansteuern einer fahrerseitigen Klimatisierungseinheit oder einer beifahrerseitigen Klimatisierungseinheit. Somit kann ein besonders hoher Komfort bereitgestellt werden.

Es kann vorgesehen sein, dass die optische Sensorvorrichtung einen Regensensor zum Erfassen eines Niederschlags auf einer lichtdurchlässigen Scheibe des Kraftfahrzeugs aufweist. Der Regensensor erfasst eine Intensität des Niederschlags beziehungsweise detektiert Feuchtigkeitstropfen auf der Scheibe des Kraftfahrzeugs. Die von dem Regensensor erfasste Intensität kann beispielsweise einem Fahrerassistenzsystem bereitgestellt werden, welches einen Scheibenwischer des Kraftfahrzeugs ansteuert. Die optische Sensorvorrichtung ist somit multifunktional gestaltet und kann besonders vielseitig eingesetzt werden.

Die Erfindung betrifft außerdem ein Fahrerassistenzsystem mit einer erfindungsgemäßen optischen Sensorvorrichtung. Insbesondere weist das Fahrerassistenzsystem eine Klimatisierungseinrichtung, beispielsweise eine Klimaanlage, auf. Eine Steuereinrichtung des Fahrerassistenzsystems ist dazu ausgelegt, in Abhängigkeit von der erfassten Strahlungsleistung die Klimatisierungseinrichtung anzusteuern.

Ein erfindungsgemäßes Kraftfahrzeug umfasst ein erfindungsgemäßes Fahrerassistenzsystem. Das Kraftfahrzeug ist insbesondere als ein Personenkraftwagen ausgestaltet.

Die mit Bezug auf die erfindungsgemäße optische Sensorvorrichtung vorgestellten Ausführungsformen und deren Vorteile gelten entsprechend für das erfindungsgemäße Fahrerassistenzsystem sowie für das erfindungsgemäße Kraftfahrzeug.

Mit Angaben "oben", "unten", "vorne", "hinten", "horizontal", "vertikal", "radial", "innen", "außen", "Fahrzeuglängsachse" (L, y-Richtung), "Fahrzeughochachse" (z-Richtung), "Fahrzeugquerachse" (x-Richtung), "Horizontalwinkel" (ϕ), "Vertikalwinkel" (ϑ), etc. sind bei bestimmungsgemäßem Gebrauch und bestimmungsgemäßem Anordnen der optischen Sensorvorrichtung am Kraftfahrzeug und bei einem dann in Richtung der Längsachse des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Dabei zeigen:
- Fig. 1: eine schematische Darstellung einer Ausführungsform eines erfindungsgemäßen Kraftfahrzeugs in einer Seitenansicht;
- Fig. 2: eine schematische Darstellung des Kraftfahrzeugs aus Fig. 1 in einer Draufsicht;
- Fig. 3: eine schematische Darstellung einer Ausführungsform einer erfindungsgemäßen optischen Sensorvorrichtung in einer Schnittansicht;
- Fig. 4: eine schematische Darstellung einer weiteren Ausführungsform einer erfindungsgemäßen optischen Sensorvorrichtung in einer Schnittansicht;
- Fig. 5: eine schematische Darstellung einer Ausführungsform einer erfindungsgemäßen optischen Sensorvorrichtung in einer Draufsicht.
- Fig. 6: eine schematische Darstellung einer Richtcharakteristik eines Empfangselementes einer Ausführungsform der optischen Sensorvorrichtung in einem Polarkoordinatensystem; und
- Fig. 7: eine schematische Darstellung einer Richtcharakteristik einer Ausführungsform einer erfindungsgemäßen optischen Sensorvorrichtung in einem Polarkoordinatensystem.

In den Figuren sind gleiche sowie funktionsgleiche Elementen mit den gleichen Bezugszeichen versehen.

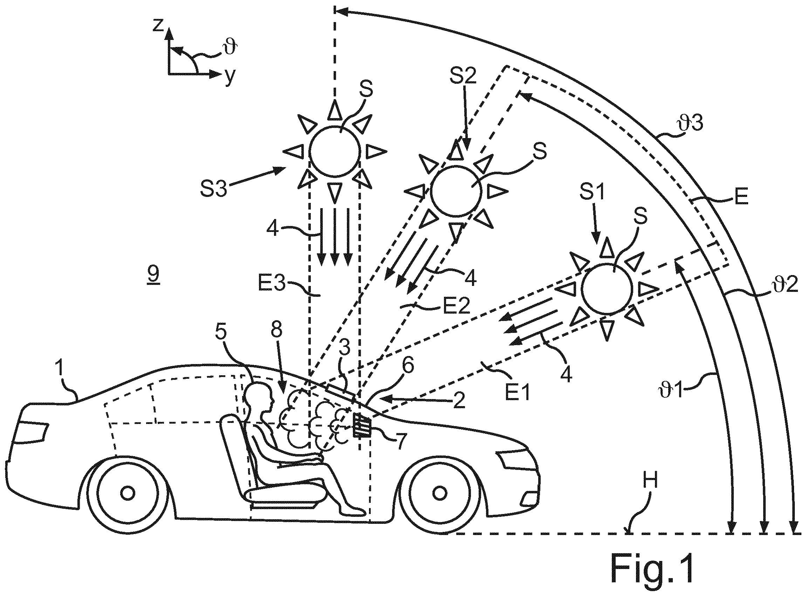

Fig. 1 zeigt ein Kraftfahrzeug 1 in einer Seitenansicht in einer z-y-Ebene. Dabei verläuft eine Fahrzeuglängsachse des Kraftfahrzeugs 1 entlang der y-Richtung und eine Fahrzeughochachse des Kraftfahrzeugs 1 entlang der z-Richtung. Das Kraftfahrzeug 1 umfasst ein Fahrerassistenzsystem 2. Das Fahrerassistenzsystem 2 weist eine optische Sensorvorrichtung 3 zum Erfassen von Sonnenstrahlung 4 der Sonne S auf. Die Sonnenstrahlung 4, welche aus einem Umgebungsbereich 9 des Kraftfahrzeugs 1 beispielsweise durch eine Windschutzscheibe 6 des Kraftfahrzeugs 1 in einen Innenraum 8 des Kraftfahrzeugs 1 fällt, heizt den Innenraum 8 und damit einen in dem Innenraum 8 sitzenden Fahrer 5 auf. Die optische Sensorvorrichtung 3, welche als ein Sonnenstandssensor ausgebildet ist, ist dazu ausgelegt, eine Strahlungsleistung der Sonnenstrahlung 4, welche auf den Fahrer 5 trifft, zu bestimmen. Die optische Sensorvorrichtung 3 ist hier an der Windschutzscheibe 6 des Kraftfahrzeugs 1 angebracht.

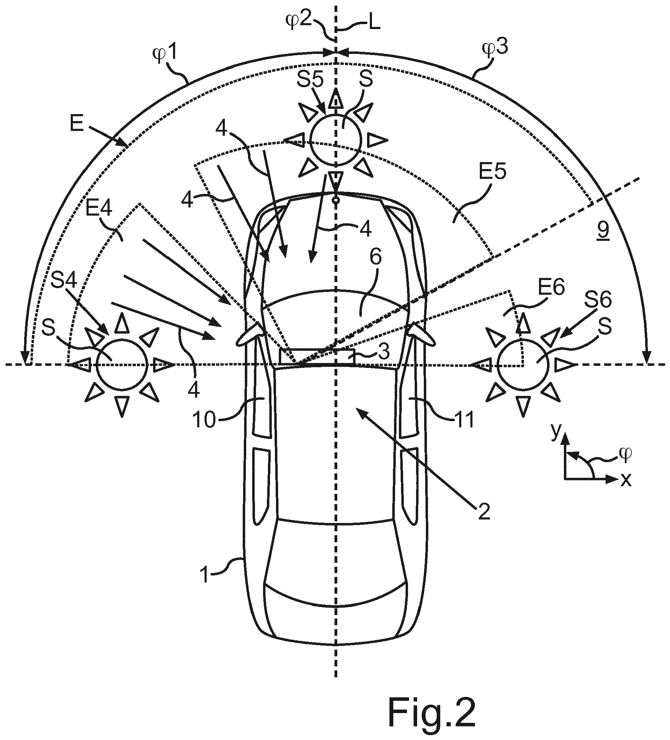

Die optische Sensorvorrichtung 3 ist dazu ausgelegt, die Strahlungsleistung der Sonnenstrahlung 4 bei verschiedenen Sonnenständen S1, S2, S3 der Sonnen S zu erfassen. Der Sonnenstand kann durch einen Vertikalwinkel ϑ und einen Horizontalwinkel ϕ (siehe Fig. 2) angegeben werden. Der Vertikalwinkel ϑ wird dabei in der z-y-Ebene gemessen und auf den Horizont H bezogen. Der Horizontalwinkel ϕ wird in einer x-y-Ebene gemessen und auf die Fahrzeuglängsachse L bezogen. Der Vertikalwinkel ϑ und der Horizontalwinkel ϕ bilden eine Vertikalkomponente und eine Horizontalkomponente eines Einfallswinkels, unter welchem die Sonnenstrahlung 4 auf die optische Sensorvorrichtung 3 trifft.

In Fig. 1 sind drei verschiedene Sonnenstände S1, S2, S3 gezeigt. Bei einem ersten Sonnenstand S1 weist die Sonne S einen ersten Vertikalwinkel ϑ1 bezogen auf den Horizont H auf, welcher beispielsweise 5°betragen kann. Bei einem zweiten Sonnenstand S2 weist die Sonne S einen zweiten Vertikalwinkel ϑ2 bezogen auf den Horizont H auf, welcher beispielsweise 45°betragen kann. Bei einem dritten Sonnenstand S3 weist die Sonne S einen dritten Vertikalwinkel ϑ3 bezogen auf den Horizont H auf, welcher beispielsweise 90°betragen kann. Dabei trifft die Sonnenstrahlung 4 bei dem ersten Sonnenstand S1 aus einem ersten Teilbereich E1 mit einem Einfallswinkel mit dem ersten Vertikalwinkel ϑ1 als die Vertikalkomponente frontal durch die Windschutzscheibe 6 auf den Fahrer 5. Die den Fahrer 5 beim ersten Sonnenstand S1 treffende Strahlungsleistung weist also einen ersten Wert auf. Die Sonnenstrahlung 4 trifft bei dem zweiten Sonnenstand S2 aus einem zweiten Teilbereich E2 mit einem Einfallswinkel mit dem zweiten Vertikalwinkel ϑ2 als die Vertikalkomponente ebenfalls auf den Fahrer 5. Die den Fahrer 5 beim zweiten Sonnenstand S2 treffende Strahlungsleistung weist einen zweiten Wert auf, welcher in etwa dem ersten Wert entspricht. Die Sonnenstrahlung 4 bei dem dritten Sonnenstand S3 aus einem dritten Teilbereich E3 mit einem Einfallswinkel mit dem dritten Vertikalwinkel ϑ3 als die Vertikalkomponente trifft kaum auf den Fahrer 5, da der Fahrer 5 hier von einem Dach des Kraftfahrzeugs 1 abgeschattet wird, welches die Sonnenstrahlung 4 blockiert. Die den Fahrer 5 beim dritten Sonnenstand S3 treffende Strahlungsleistung weist also einen im Vergleich zum ersten und zweiten Wert kleineren dritten Wert auf.

Die optische Sensorvorrichtung 3 ist dabei dazu ausgelegt, die den Fahrer 5 treffende Strahlungsleistung für die Sonnenstrahlung 4 aus dem ersten Teilbereich E1 und dem zweiten Teilbereich E2 einfallswinkelunabhängig, also hier vertikalwinkelunabhängig, zu erfassen. Die optische Sensorvorrichtung 3 ist dazu ausgelegt, die erfasste Strahlungsleistung dem Fahrerassistenzsystem 2 bereitzustellen. Das Fahrerassistenzsystem 2 ist dazu ausgelegt, in Abhängigkeit des jeweiligen erfassten Wertes der Strahlungsleistung eine Klimatisierungseinrichtung 7 des Fahrerassistenzsystems 2 zum Klimatisieren des Innenraums 8 anzusteuern. Die Klimatisierungseinrichtung 7 kann beispielsweise den Innenraum 8 des Kraftfahrzeugs 1 bei dem ersten Sonnenstand S1 und bei dem zweiten Sonnenstand S2 stärker kühlen als bei dem dritten Sonnenstand S3. Somit kann durch die Klimatisierungseinrichtung 7 eine beispielsweise von dem Fahrer 5 für den Innenraum 8 vorgegebene Temperatur auf einem konstanten Wert gehalten werden.

Fig. 2 zeigt das Kraftfahrzeug 1 in einer Draufsicht in der x-y-Ebene. Eine Fahrzeugquerachse des Kraftfahrzeugs 1 verläuft entlang der x-Richtung. Hier sind wiederum drei Sonnenstände S4, S5, S6 bei verschiedenen Horizontalwinkeln ϕ der Sonne S gezeigt. Bei einem vierten Sonnenstand S4 weist die Sonne S einen ersten Horizontalwinkel ϑ1 bezogen auf die Fahrzeuglängsachse L auf, welcher beispielsweise + 90°betragen kann. Bei einem fünften Sonnenstand S5 weist die Sonne S einen zweiten Horizontalwinkel ϕ2 bezogen auf die Fahrzeuglängsachse L auf, welcher beispielsweise 0°betragen kann. Bei einem sechsten Sonnenstand S6 weist die Sonne S einen dritten Horizontalwinkel ϕ3 bezogen auf die Fahrzeuglängsachse L auf, welcher beispielsweise - 90°betragen kann. Bei dem vierten Sonnenstand S4 trifft die Sonnenstrahlung 4 aus einem vierten Teilbereich E4 mit einem Einfallswinkel mit dem ersten Horizontalwinkel ϕ1 als die Horizontalkomponente den Fahrer 5 durch eine fahrerseitige Seitenscheibe 10 des Kraftfahrzeugs 1. Die den Fahrer 5 beim vierten Sonnenstand S4 treffende Strahlungsleistung weist einen vierten Wert auf. Bei dem fünften Sonnenstand S5 trifft die Sonnenstrahlung 4 aus einem fünften Teilbereich E5 mit einem Einfallswinkel mit dem zweiten Horizontalwinkel ϕ2 als die Horizontalkomponente frontal durch die Windschutzscheibe 6 des Kraftfahrzeugs 1 auf den Fahrer 5. Die den Fahrer 5 bei dem fünften Sonnenstand S5 treffende Strahlungsleistung weist dabei einen fünften Wert auf, welcher gleich dem vierten Wert ist. Bei dem sechsten Sonnenstand S6 trifft die Sonnenstrahlung 4 aus einem sechsten Teilbereich E6 mit einem Einfallswinkel mit dem dritten Horizontalwinkel ϕ3 als die Horizontalkomponente insbesondere nicht den Fahrer 5, sondern einen in dem Innenraum 8 sitzenden Beifahrer des Kraftfahrzeugs 1 durch eine beifahrerseitige Seitenscheibe 11 des Kraftfahrzeugs 1. Die den Fahrer 5 aus dem sechsten Teilbereich E6 beim sechsten Sonnenstand S6 treffende Strahlungsleistung weist also einen im Vergleich zum vierten und zum fünften Wert kleineren sechsten Wert auf.

Die optische Sensorvorrichtung 3 ist dabei dazu ausgelegt, die den Fahrer 5 treffende Strahlungsleistung für die Sonnenstrahlung 4 aus dem vierten Teilbereich E4 und dem fünften Teilbereich E5 einfallswinkelunabhängig, also hier horizontalwinkelunabhängig, zu erfassen. Die optische Sensorvorrichtung 3 ist also dazu ausgelegt, die Strahlungsleistung der Sonnenstrahlung 4 für einen vorbestimmten Einfallswinkelbereich E, welcher hier durch den ersten, den zweiten, den vierten und den fünften Teilbereich E1, E2, E4, E5 ausgebildet wird, einfallswinkelunabhängig, also vertikalwinkelunabhängig und horizontalwinkelunabhängig zu erfassen. Die Teilbereiche E1, E2 sind dabei Vertikalwinkelbereiche, sodass in Fig. 1 der Vertikalwinkelbereich des Einfallswinkelbereiches E dargestellt ist. Die Teilbereiche E4, E5 sind Horizontalwinkelbereiche, sodass in Fig. 2 der Horizontalwinkelbereich des Einfallswinkelbereiches E dargestellt ist.

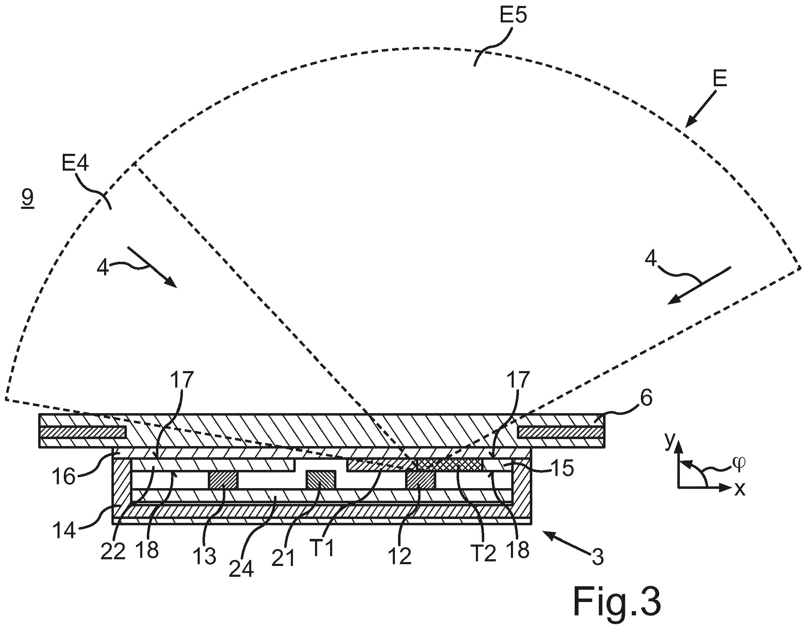

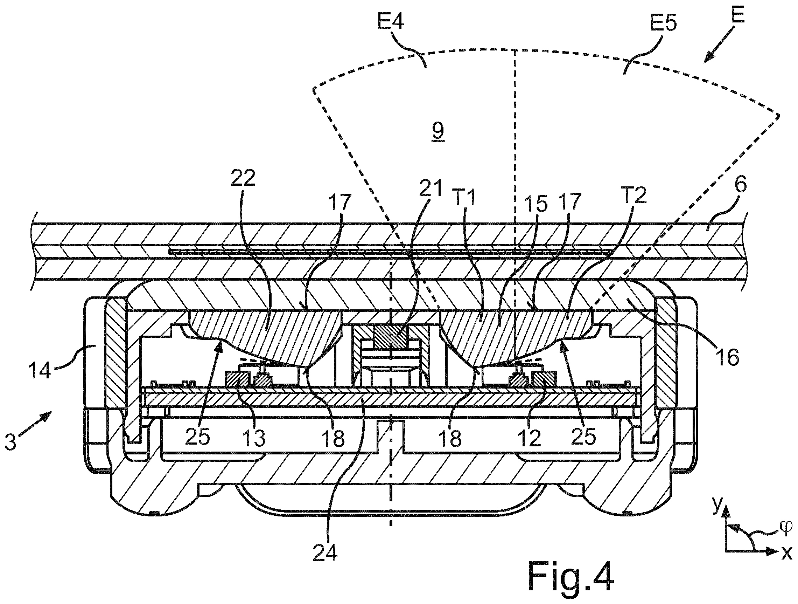

Fig. 3 und Fig. 4 zeigen die optische Sensorvorrichtung 3 in einer Schnittansicht. Die optische Sensorvorrichtung 3 umfasst zwei lichtsensitive Empfangselemente 12, 13, welche auf einem Träger 24, beispielsweise einer Leiterplatte beziehungsweise Platine, in einem Sensorgehäuse 14 angeordnet sind. Das Empfangselement 12 ist zum Erfassen der Strahlungsleistung der Sonnenstrahlung 4 auf den Fahrer 5 vorgesehen. Das Empfangselement 13 ist zum Erfassen von Strahlungsleistung auf den Beifahrer vorgesehen. Die lichtsensitiven Empfangselemente 12, 13 können beispielsweise als Fotodioden ausgebildet sein. Außerdem umfasst die optische Sensorvorrichtung 3 eine erste optisch abbildende Einrichtung 15, welche zwischen dem Umgebungsbereich 9 und dem Empfangselement 12 angeordnet ist und welche die Sonnenstrahlung 4 aus dem Umgebungsbereich 9 auf das Empfangselement 12 transmittiert. Außerdem umfasst die optische Sensorvorrichtung 3 eine zweite optisch abbildende Einrichtung 22, welche zwischen dem Umgebungsbereich 9 und dem Empfangselement 13 angeordnet ist und welche die Sonnenstrahlung 4 aus dem Umgebungsbereich 9 auf das Empfangselement 13 transmittiert. Die optisch abbildenden Einrichtungen 15, 22, welche insbesondere als Linsen ausgebildet sind, umfassen dabei eine Oberseite 17, welche dem Umgebungsbereich 9 zugewandt ist und welche über eine lichtdurchlässige Verbindungsschicht 16 mit der Windschutzscheibe 6 des Kraftfahrzeugs 1 gekoppelt ist, und eine Unterseite 18, welche den Empfangselementen 12, 13 zugewandt ist. Die Sonnenstrahlung 4 wird dabei aus dem Umgebungsbereich 9 von der Oberseite 17 zur Unterseite 18 auf die Empfangselemente 12, 13 transmittiert. Die Empfangselemente 12, 13 weisen eine einfallswinkelabhängige Sensitivität auf. Dies bedeutet, dass eine von den Empfangselementen 12, 13 erfasste Strahlungsleistung abhängig von einem Einfallswinkel der Sonnenstrahlung 4 ist. Die Empfangselemente 12, 13 weisen also eine ungleichmäßige Richtcharakteristik auf. Die optische Sensorvorrichtung 3 kann außerdem einen Regensensor 21 zum Erfassen eines Niederschlags auf die Windschutzscheibe 6 aufweisen.

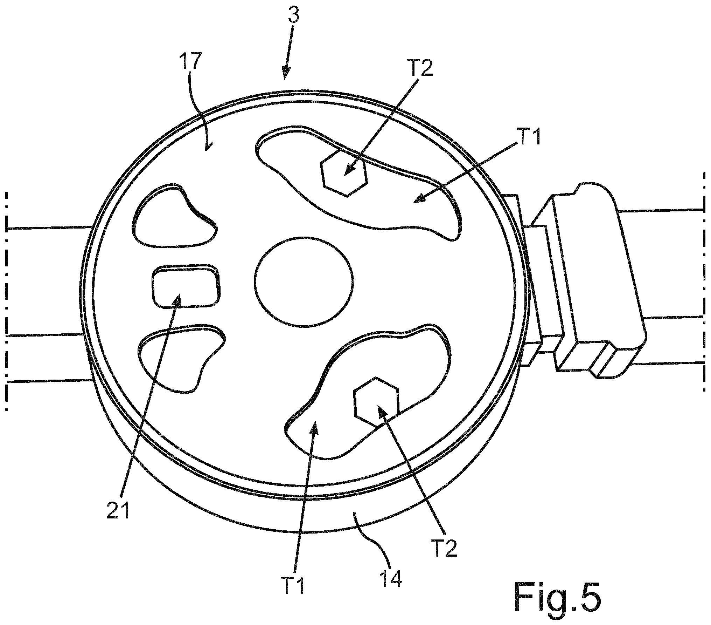

Fig. 5 zeigt die optischen Sensorvorrichtung 3 in gehäuster Form. Das Gehäuse 14 ist hier zylinderförmig, sodass die optisch abbildende Einrichtung 15 eine kreisförmige Oberseite 17 aufweist.

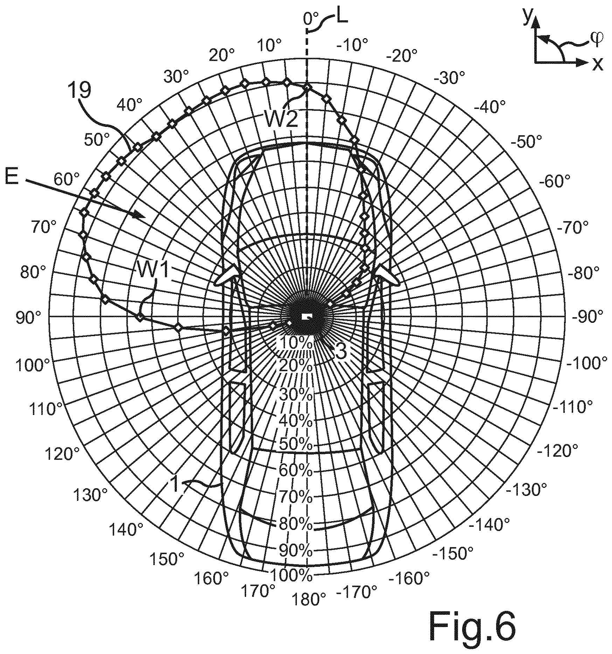

Fig. 6 zeigt beispielhaft eine Richtcharakteristik 19 des Empfangselementes 12 für den vorbestimmten Erfassungsbereich E in einem Polarkoordinatensystem, welche hier über einen Horizontalkomponentenbereich ϕ des Einfallswinkels der Sonnenstrahlung 4 bei einer festen Vertikalkomponente ϑ des Einfallswinkels der Sonnenstrahlung 4, beispielsweise 75°bezogen auf den Horizont H, aufg etragen ist. Das Empfangselement 12 ist hier im Mittelpunkt des Polarkoordinatensystems angeordnet. Die Winkelkoordinaten des Polarkoordinatensystems entsprechen den Horizontalkomponenten ϕ des Einfallswinkels. Die Radialkoordinaten des Polarkoordinatensystems entsprechen einem Richtfaktor des Empfangselementes 12. Der Richtfaktor kann als ein Quotient aus der von dem Empfangselement 12 erfassten Strahlungsleistung bezogen auf die von der Sonne ausgesendete Strahlungsleistung in Prozent angegeben werden. Aus Fig. 6 ist ersichtlich, dass der Richtfaktor bei einer Horizontalkomponente ϕ des Einfallswinkels von 90°einen Wert W1 von 65% aufweist. Bei einer Horizontalkomponente ϕ des Einfallswinkels von 0°weist der Quotient eine n Wert W2 von 90% aufweist. Diese Abhängigkeit der Sensitivität des Empfangselementes 12 von der Horizontalkomponente ϕ innerhalb des vorbestimmten Erfassungsbereiches E ist, wie in Fig. 2 beschrieben, unerwünscht.

Daher sind die optisch abbildenden Einrichtungen 15, 22 aus den Fig. 3 und 4 zum Kompensieren der einfallswinkelabhängigen Sensitivität, also zum Einstellen einer gleichmäßigen Richtcharakteristik für die Empfangselemente 12, 13, ausgebildet. Dazu verändern die optisch abbildenden Einrichtungen 15, 22 die Strahlungsleistung der Sonnenstrahlung 4 beziehungsweise eine Strahlungsintensität beim Transmittieren in Abhängigkeit von dem Einfallswinkel, sodass die Empfangselemente 12, 13 die Strahlungsleistung der Sonnenstrahlung 4 aus dem vorbestimmten Einfallswinkelbereich E einfallswinkelunabhängig erfassen. Die optisch abbildende Einrichtung 15 kann beispielsweise Sonnenstrahlung 4 aus dem vierten Teilbereich E4 des Einfallswinkelbereiches E, für welchen das Empfangselement 12 eine niedrige Sensitivität aufweist, beim Transmittieren verstärken und/oder Sonnenstrahlung 4 aus dem fünften Teilbereich E5 des Einfallswinkelbereiches E, für welchen das Empfangselement 12 eine hohe Sensitivität aufweist, beim Transmittieren höchstens abschwächen.

Dazu kann, wie anhand der ersten optisch abbildenden Einrichtung 15 in Fig. 3 gezeigt, die optisch abbildende Einrichtung 15 beispielsweise zumindest zwei Transmissionsbereiche T1, T2 aufweisen. Dabei ist ein erster Transmissionsbereich T1 dem vierten Teilbereich E4 zugeordnet und ein zweiter Transmissionsbereich T2 dem fünften Teilbereich E5 zugeordnet. Durch den ersten Transmissionsbereich T1 wird also Sonnenstrahlung 4 aus dem vierten Teilbereich E4 auf das Empfangselement 12 transmittiert und durch den zweiten Transmissionsbereich T2 Sonnenstrahlung 4 aus dem fünften Teilbereich E5 auf das Empfangselement 12 transmittiert. Dabei kann der erste Transmissionsbereich T1 beispielsweise einen höheren Transmissionsgrad aufweisen als der zweite Transmissionsbereich T2. Ebenso kann die zweite optisch abbildende Einrichtung 22 unterschiedliche, hier nicht gezeigte Transmissionsbereiche aufweisen.

Zum Ausbilden der unterschiedlichen Transmissionsgrade kann beispielsweise die Oberseite 17 und/oder die Unterseite 18 der optisch abbildenden Einrichtung 15 unterschiedliche Oberflächenrauheiten aufweisen. Beispielsweise kann die Oberseite 17 und/oder die Unterseite 18 der optisch abbildenden Einrichtung im ersten Transmissionsbereich T1 glatt poliert sein und im zweiten Transmissionsbereich T2 erodierrau hergestellt sein. Dies ist in der Darstellung der optischen Sensorvorrichtung 3 in Fig. 5 dargestellt. Durch die aufgerauten Transmissionsbereiche T2 auf der Oberseite 17 der optisch abbildenden Einrichtung 15 wird die Sonnenstrahlung 4 beim Transmittieren durch den zweiten Transmissionsbereich T2 stärker gestreut als beim Transmittieren der Sonnenstrahlung 4 durch den ersten Transmissionsbereich T1. Durch die Streuung kann die das Empfangselement 12 treffende Strahlungsleistung reduziert werden. Der Transmissionsbereich T2 mit erodierrauen Oberfläche kann in seiner geometrischen Form und/oder Größe und/oder Lage kundenspezifisch hergestellt werden. Hier sind die aufgerauten zweiten Transmissionsbereiche T2 beispielsweise als wabenförmige beziehungsweise sechseckige Bereiche ausgebildet. Es kann aber auch vorgesehen sein, dass die Transmissionsbereiche T2 kreisförmig und/oder oval und/oder viereckig ausgestaltet sind. Insbesondere ist hier eine Fläche des ersten Transmissionsbereiches T1 größer als eine Fläche der zweiten Transmissionsbereiche T2. Durch die Ausgestaltung der Transmissionsbereiche T1, T2 kann die Richtcharakteristik speziell an den Fahrer 5 angepasst werden.

Auch kann, wie in Fig. 4 gezeigt, vorgesehen sein, dass die Oberseite 17 und/oder die Unterseite 18 der als Linse ausgebildeten optisch abbildenden Einrichtung 15 als eine Freiformfläche 25 ausgebildet ist. So kann die Oberseite 17 und/oder die Unterseite 18 im ersten Transmissionsbereich T1 beispielsweise konvex gewölbt sein und somit als eine Sammellinse zum Fokussieren der Sonnenstrahlung 4 aus dem vierten Teilbereich E4 fungieren. In dem zweiten Transmissionsbereich T2 kann die Oberseite 17 und/oder die Unterseite 18 beispielsweise konkav gewölbt sein und somit als eine Streulinse zum Streuen der Sonnenstrahlung 4 aus dem fünften Teilbereich E5 fungieren.

Mittels den optisch abbildenden Einrichtungen 15, 22 kann also erreicht werden, dass die von den Empfangselementen 12, 13 erfasste Strahlungsleistung der Sonnenstrahlung 4 aus dem vorbestimmten Einfallswinkelbereich E einfallswinkelunabhängig und somit die den Fahrer 5 beziehungsweise den Beifahrer treffende Strahlungsleistung korrekt bestimmt werden kann. Somit kann beispielsweise verhindert werden, dass der Innenraum 8 für Sonnenstrahlung 4 aus dem vierten Teilbereich E4 zu schwach gekühlt wird, weil das Empfangselement 12 die Strahlungsleistung aufgrund der schwachen Sensitivität für diesen Teilbereich E4 nicht korrekt erfassen kann, obwohl die Sonnenstrahlung 4 den Fahrer 5 vollständig durch die fahrerseitige Seitenscheibe 10 trifft.

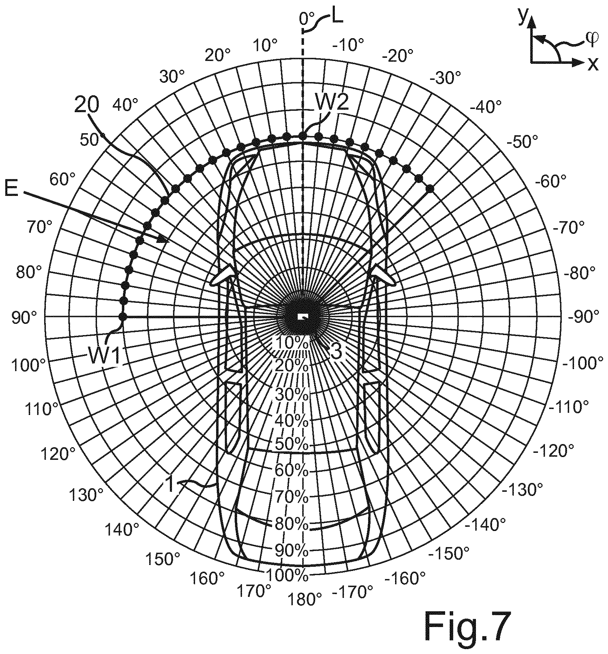

Fig. 7 zeigt beispielhaft eine Richtcharakteristik 20 der optischen Sensorvorrichtung 3, welche die Strahlungsleistung beim Transmittieren mittels der optisch abbildenden Einrichtung 15 an die einfallswinkelabhängige Sensitivität des Empfangselementes 12 anpasst. Hier weist der Richtfaktor bei einer Horizontalkomponente ϕ des Einfallswinkels von 90°und der Vertikalkomponente ϑ von 75°, den Wert W1 von 70% und bei einer Horizontalkomponente ϕ des Einfallswinkels von 0°den Wert W2 von ebenfal Is 70% auf. Aus der eingestellten Richtcharakteristik 20 kann die den Fahrer 5 treffende Strahlungsleistung innerhalb des vorbestimmten Einfallswinkelbereiches E korrekt bestimmt werden und somit die Klimatisierungseinrichtung 7 zuverlässig angesteuert werden.

## Patentansprüche

1. Optische Sensorvorrichtung (3) für ein Kraftfahrzeug (1) zum Bestimmen einer, auf einen sich innerhalb des Kraftfahrzeugs (1) befindlichen Fahrer (5) treffenden Strahlungsleistung von Sonnenstrahlung (4), mit einem lichtsensitiven Empfangselement (12) zum Erfassen der Strahlungsleistung, wobei das lichtsensitive Empfangselement (12) für einen vorbestimmten Einfallswinkelbereich (E) der Sonnenstrahlung (4) eine einfallswinkelabhängige Sensitivität aufweist, und mit einer optisch abbildenden Einrichtung (15) zum Transmittieren der Sonnenstrahlung (4) auf das lichtsensitive Empfangselement (12),
**dadurch gekennzeichnet, dass**
die optisch abbildende Einrichtung (15) dazu ausgelegt ist, die Strahlungsleistung der aus dem vorbestimmten Einfallswinkelbereich (E) auf die optisch abbildende Einrichtung (15) fallenden Sonnenstrahlung (4) zum Kompensieren der einfallswinkelabhängigen Sensitivität des lichtsensitiven Empfangselementes (12) beim Transmittieren einfallswinkelabhängig zu verändern, sodass die nach dem Transmittieren von dem lichtsensitiven Empfangselement (12) erfasste Strahlungsleistung innerhalb des vorbestimmten Einfallswinkelbereiches (E) einfallswinkelunabhängig ist, wobei die optisch abbildende Einrichtung (15) einen ersten Transmissionsbereich (T1) zum Transmittieren der Sonnenstrahlung (4) aus einem ersten Teilbereich (E1, E4) des Einfallswinkelbereiches (E) aufweist, welchem ein erster Sensitivitätswert des Empfangselementes (12) zugeordnet ist, und zumindest einen zweiten Transmissionsbereich (T2) zum Transmittieren der Sonnenstrahlung (4) aus einem zweiten Teilbereich (E2, E5) des Einfallswinkelbereiches (E) aufweist, welchem ein gegenüber dem ersten Sensitivitätswert größerer zweiter Sensitivitätswert zugeordnet ist, **dadurch gekennzeichnet, dass** die optisch abbildende Einrichtung (15) dazu ausgelegt ist, die Strahlungsleistung der Sonnenstrahlung (4) aus dem ersten Teilbereich (E1, E4) beim Transmittieren durch den ersten Transmissionsbereich (T1) zu verstärken und die Strahlungsleistung der Sonnenstrahlung (4) aus dem zweiten Teilbereich (E2) beim Transmittieren durch den zweiten Transmissionsbereich (T2, E5) abzuschwächen, und wobei die optisch abbildende Einrichtung (15) als eine Linse ausgebildet ist, wobei eine Oberseite (17), über welche die Sonnenstrahlung (4) in die Linse eintritt, und/oder eine dem lichtsensitiven Empfangselement (12) zugewandte Unterseite (18) der Linse als eine Freiformfläche (25) ausgebildet ist, durch welche in dem ersten Transmissionsbereich (T1) die Linse als eine Sammellinse ausgebildet ist und in dem zumindest einen zweiten Transmissionsbereich (T2) die Linse als eine Streulinse ausgebildet ist.

2. Optische Sensorvorrichtung (3) nach Anspruch 1,
**dadurch gekennzeichnet, dass**
der vorbestimmte Einfallswinkelbereich (E) einen vorbestimmten Horizontalwinkelbereich (E4, E5) und einen vorbestimmten Vertikalwinkelbereich (E1, E2) aufweist, wobei die optisch abbildende Einrichtung (15) dazu ausgelegt ist, die Strahlungsleistung der aus dem vorbestimmten Einfallswinkelbereich (E) auf die optisch abbildende Einrichtung (15) fallenden Sonnenstrahlung (4) beim Transmittieren horizontalwinkelabhängig und vertikalwinkelabhängig zu verändern, sodass die von dem lichtsensitiven Empfangselement (12) erfasste Strahlungsleistung innerhalb des vorbestimmten Horizontalwinkelbereiches (E4, E5) horizontalwinkelunabhängig und innerhalb des vorbestimmten Vertikalwinkelbereiches (E1, E2) vertikalwinkelunabhängig ist.

3. Optische Sensorvorrichtung (3) nach Anspruch 2,
**dadurch gekennzeichnet, dass**
als der vorbestimmte Horizontalwinkelbereich (E4, E5) ein Winkelbereich mit Horizontalwinkeln (ϕ) zwischen - 45°bis zu + 90°bezogen auf eine Fahrzeuglängsachse (L) vorgegeben ist.

4. Optische Sensorvorrichtung (3) nach Anspruch 2 oder 3,
**dadurch gekennzeichnet, dass**
als der vorbestimmte Vertikalwinkelbereich (E1, E2) ein Winkelbereich mit Vertikalwinkeln (ϑ) zwischen 5° und 50°bezogen auf den Horizont (H) vorgegeben ist.

5. Optische Sensorvorrichtung (3) nach einem der vorhergehenden Ansprüche,
**dadurch gekennzeichnet, dass**
der erste Transmissionsbereich (T1) der optisch abbildenden Einrichtung (15) einen ersten Transmissionsgrad aufweist und der zumindest eine zweite Transmissionsbereich (T2) einen gegenüber dem ersten Transmissionsgrad verringerten zweiten Transmissionsgrad aufweist.

6. Optische Sensorvorrichtung (3) nach Anspruch 5,
**dadurch gekennzeichnet, dass**
die optisch abbildende Einrichtung (15) auf einer Oberseite (17), über welche die Sonnenstrahlung (4) die optisch abbildende Einrichtung (15) betritt, und/oder auf einer dem lichtsensitiven Empfangselement (12) zugewandten Unterseite (18) in dem ersten Transmissionsbereich (T1) zum Bereitstellen des ersten Transmissionsgrades eine erste Oberflächenrauheit aufweist und in dem zumindest einen zweiten Transmissionsbereich (T2) zum Bereitstellen des zweiten Transmissionsgrades eine gegenüber der ersten Oberflächenrauheit vergrößerte zweite Oberflächenrauheit aufweist.

7. Optische Sensorvorrichtung (3) nach Anspruch 6,
**dadurch gekennzeichnet, dass**
die Oberseite (17) und/oder die Unterseite (18) der optisch abbildenden Einrichtung (15) zum Bereitstellen der ersten Oberflächenrauheit in dem ersten Transmissionsbereich (T1) glatt poliert ist und in dem zumindest einen zweiten Transmissionsbereich (T2) zum Bereitstellen der zweiten Oberflächenrauheit aufgeraut ist.

8. Optische Sensorvorrichtung (3) nach einem der vorhergehenden Ansprüche,
**dadurch gekennzeichnet, dass**
die optische Sensorvorrichtung (3) zum Bestimmen einer, auf einen sich innerhalb des Kraftfahrzeugs (1) befindlichen Beifahrer treffenden Strahlungsleistung von Sonnenstrahlung (4) ein weiteres lichtsensitives Empfangselement (13) zum Erfassen der Strahlungsleistung und eine weitere optisch abbildende Einrichtung (22) aufweist, wobei das weitere lichtsensitive Empfangselement (13) eine einfallswinkelabhängige Sensitivität aufweist und die weitere optisch abbildende Einrichtung (22) dazu ausgelegt ist, die Strahlungsleistung zum Kompensieren der einfallswinkelabhängigen Sensitivität des weiteren lichtsensitiven Empfangselementes (13) beim Transmittieren einfallswinkelabhängig zu verändern, sodass die nach dem Transmittieren von dem lichtsensitiven Empfangselement (13) erfasste Strahlungsleistung innerhalb des vorbestimmten weiteren Einfallswinkelbereiches einfallswinkelunabhängig ist.

9. Optische Sensorvorrichtung (3) nach einem der vorhergehenden Ansprüche,
**dadurch gekennzeichnet, dass**
die optische Sensorvorrichtung (3) einen Regensensor (21) zum Erfassen eines Niederschlags auf einer Scheibe (6) des Kraftfahrzeugs (1) aufweist.

10. Fahrerassistenzsystem (2) mit einer optischen Sensorvorrichtung (3) nach einem der vorhergehenden Ansprüche.

11. Fahrerassistenzsystem (2) nach Anspruch 10,
**dadurch gekennzeichnet, dass**
das Fahrerassistenzsystem (2) ein Klimatisierungseinrichtung (7) aufweist und eine Steuereinrichtung des Fahrerassistenzsystems (2) dazu ausgelegt ist, in Abhängigkeit von der erfassten Strahlungsleistung die Klimatisierungseinrichtung (7) anzusteuern.

12. Kraftfahrzeug (1) mit einem Fahrerassistenzsystem (2) nach Anspruch 10 oder 11.

## Claims

1. Optical sensor apparatus (3) for a motor vehicle (1) for determining the radiant flux of solar radiation (4) striking a driver (5) situated within the motor vehicle (1), having a light-sensitive reception element (12) for capturing the radiant flux, wherein the light-sensitive reception element (12) has angle-of-incidence-dependent sensitivity for a predetermined angle-of-incidence range (E) of the solar radiation (4), and having an optical imaging device (15) for transmitting the solar radiation (4) to the light-sensitive reception element (12),
**characterized in that**
the optically imaging device (15) is configured to modify the radiant flux of the solar radiation (4) striking the optical imaging device (15) from the predetermined angle-of-incidence range (E) in an angle-of-incidence-dependent manner during transmission for the purposes of compensating the angle-of-incidence-dependent sensitivity of the light-sensitive reception element (12) such that the radiant flux captured by the light-sensitive reception element (12) after transmission is independent of the angle of incidence within the predetermined angle-of-incidence range (E), wherein the optically imaging device (15) has a first transmission region (T1) for transmitting the solar radiation (4) from a first portion (E1, E4) of the angle-of-incidence range (E), said first transmission region having assigned to it a first sensitivity value of the reception element (12), and at least one second transmission region (T2) for transmitting the solar radiation (4) from a second portion (E2, E5) of the angle-of-incidence range (E), which at least one second transmission region has assigned to it a second sensitivity value that is greater than the first sensitivity value, **characterized in that** the optically imaging device (15) is configured to amplify the radiant flux of the solar radiation (4) from the first portion (E1, E4) during the transmission through the first transmission region (T1) and attenuate the radiant flux of the solar radiation (4) from the second portion (E2) during transmission through the second transmission region (T2, E5), and wherein the optically imaging device (15) is embodied as a lens, wherein an upper side (17), by means of which the solar radiation (4) enters the lens, and/or a lower side (18), facing the light-sensitive reception element (12), of the lens is embodied as a free-form surface (25), by means of which the lens is embodied as a converging lens in the first transmission region (T1) and the lens is embodied as a diverging lens in the at least one second transmission region (T2).

2. Optical sensor apparatus (3) according to Claim 1,
**characterized in that**
the predetermined angle-of-incidence range (E) has a predetermined horizontal angle range (E4, E5) and a predetermined vertical angle range (E1, E2), wherein the optically imaging device (15) is configured to modify the radiant flux of the solar radiation (4) striking the optically imaging device (15) from the predetermined angle-of-incidence range (E) in a horizontal-angle-dependent and vertical-angle-dependent manner during transmission such that the radiant flux captured by the light-sensitive reception element (12) is independent of the horizontal angle within the predetermined horizontal angle range (E4, E5) and independent of the vertical angle within the predetermined vertical angle range (E1, E2).

3. Optical sensor apparatus (3) according to Claim 2,
**characterized in that**
an angle range with horizontal angles (ϕ) between -45° and +90° in relation to a vehicle longitudinal axis (L) is set as the predetermined horizontal angle range (E4, E5).

4. Optical sensor apparatus (3) according to Claim 2 or 3,
**characterized in that**
an angle range with vertical angles (θ) between 5° and 50° in relation to the horizon (H) is set as the predetermined vertical angle range (E1, E2).

5. Optical sensor apparatus (3) according to any one of the preceding claims,
**characterized in that**
the first transmission region (T1) of the optically imaging device (15) has a first transmittance and the at least one second transmission region (T2) has a second transmittance that is reduced in relation to the first transmittance.

6. Optical sensor apparatus (3) according to Claim 5,
**characterized in that**
the optically imaging device (15) has in the first transmission region (T1) a first surface roughness on an upper side (17), by means of which the solar radiation (4) enters the optically imaging device (15), and/or on a lower side (18), facing the light-sensitive reception element (12), for the purposes of providing the first transmittance and has in the at least one second transmission region (T2) a second surface roughness that is increased in relation to the first surface roughness for the purposes of providing the second transmittance.

7. Optical sensor apparatus (3) according to Claim 6,
**characterized in that**
the upper side (17) and/or the lower side (18) of the optically imaging device (15) is polished smooth in the first transmission region (T1) for providing the first surface roughness and roughened in the at least one second transmission region (T2) for providing the second surface roughness.

8. Optical sensor apparatus (3) according to any one of the preceding claims,
**characterized in that**
the optical sensor apparatus (3) has a further light-sensitive reception element (13) for capturing the radiant flux and a further optically imaging device (22), for the purposes of determining the radiant flux of solar radiation (4) striking a front seat passenger situated within the motor vehicle (1), wherein the further light-sensitive reception element (13) has an angle-of-incidence-dependent sensitivity and the further optically imaging device (22) is configured to modify the radiant flux in an angle-of-incidence-dependent manner during transmission for the purposes of compensating the angle-of-incidence-dependent sensitivity of the further light-sensitive reception element (13) such that the radiant flux captured by the light-sensitive reception element (13) after transmission is independent of the angle of incidence within the predetermined further angle-of-incidence range.

9. Optical sensor apparatus (3) according to any one of the preceding claims,
**characterized in that**
the optical sensor apparatus (3) has a rain sensor (21) for capturing precipitation on a pane (6) of the motor vehicle (1).

10. Driver assistance system (2) having an optical sensor apparatus (3) according to any one of the preceding claims.

11. Driver assistance system (2) according to Claim 10,
**characterized in that**
the driver assistance system (2) has a climate-control device (7) and a control device of the driver assistance system (2) is configured to actuate the climate-control device (7) depending on the captured radiant flux.

12. Motor vehicle (1) having a driver assistance system (2) according to Claim 10 or 11.

## Revendications

1. Dispositif de capteur optique (3) pour véhicule automobile (1) destiné à déterminer une puissance de rayonnement du rayonnement solaire (4) incident sur un conducteur (5) se trouvant à l'intérieur du véhicule automobile (1), comportant un élément récepteur (12) sensible à la lumière destiné à détecter la puissance de rayonnement, dans lequel l'élément récepteur sensible à la lumière (12) présente une sensibilité dépendant de l'angle d'incidence pour une plage d'angles d'incidence (E) prédéterminée du rayonnement solaire (4), et comportant un dispositif de formation d'image optique (15) destiné à transmettre le rayonnement solaire (4) à l'élément récepteur sensible à la lumière (12),
**caractérisé en ce que** le dispositif de formation d'image optique (15) est conçu de manière à faire varier en fonction de l'angle d'incidence la puissance de rayonnement du rayonnement solaire (4) provenant de la plage d'angles d'incidence (E) prédéterminée et incident sur le dispositif de formation d'image optique (15) pour compenser la sensibilité de l'élément récepteur sensible à la lumière (12) en fonction de l'angle d'incidence lors de la transmission, de manière à ce que la puissance de rayonnement détectée par l'élément récepteur sensible à la lumière (12) après la transmission soit indépendante de l'angle d'incidence dans la plage d'angles d'incidence (E) prédéterminée, dans lequel le dispositif de formation d'image optique (15) comporte une première région de transmission (T1) destinée à transmettre le rayonnement solaire (4) provenant d'une première plage partielle (E1, E4) de la plage d'angles d'incidence (E), à laquelle est associée une première valeur de sensibilité de l'élément récepteur (12), et comporte au moins une seconde région de transmission (T2) destinée à transmettre le rayonnement solaire (4) provenant d'une seconde plage partielle (E2, E5) de la plage d'angles d'incidence (E), à laquelle est associée une seconde valeur de sensibilité supérieure à la première valeur de sensibilité, et
**caractérisé en ce que** le dispositif de formation d'image optique (15) est conçu pour amplifier la puissance de rayonnement du rayonnement solaire (4) provenant de la première région partielle (E1, E4) lors de la transmission à travers la première région de transmission (T1) et pour atténuer la puissance de rayonnement du rayonnement solaire (4) de la seconde plage partielle (E2) lors de la transmission à travers la seconde région de transmission (T2, E5), et dans lequel le dispositif de formation d'image optique (15) est réalisé sous la forme d'une lentille, dans lequel une face supérieure (17) par l'intermédiaire de laquelle le rayonnement solaire (4) pénètre dans la lentille et/ou une face inférieure (18) de la lentille tournée vers l'élément récepteur sensible à la lumière (12) est réalisée sous la forme d'une surface de forme libre (25), au moyen de laquelle la lentille est réalisée sous la forme d'une lentille collectrice dans la première région de transmission (T1) et la lentille est réalisée sous la forme d'une lentille de diffusion dans au moins une seconde région de transmission (T2).

2. Dispositif de capteur optique (3) selon la revendication 1,
**caractérisé en ce que** l'angle prédéterminé de la plage d'angles d'incidence (E) comporte une plage d'angles horizontaux (E4, E5) prédéterminée et une plage d'angles verticaux (E1, E2) prédéterminée, dans lequel le dispositif de formation d'image optique (15) est conçu pour faire varier la puissance de rayonnement du rayonnement solaire (4) incident en provenance de la plage d'angles (E) prédéterminée sur le dispositif optique (15) en fonction de l'angle horizontal et de l'angle vertical lors de la transmission, de manière à ce que la puissance de rayonnement détectée par l'élément récepteur sensible à la lumière (12) soit indépendante de l'angle horizontal dans la plage d'angles horizontaux (E4, E5) prédéterminée et soit indépendante de l'angle vertical dans la plage d'angles verticaux (E1, E2) prédéterminée.

3. Dispositif de capteur optique (3) selon la revendication 2,
**caractérisé en ce que** la plage d'angles horizontaux (E4, E5) prédéterminée est une plage angulaire ayant des angles horizontaux (ϕ) allant de -45° à +90° par rapport à un axe longitudinal de véhicule (L).

4. Dispositif de capteur optique (3) selon la revendication 2 ou 3,
**caractérisé en ce qu'**une plage angulaire ayant des angles verticaux (θ) compris entre 5° et 50° par rapport à l'horizon (H) est prédéfinie en tant que plage angulaire verticale prédéterminée (E1, E2).

5. Dispositif de capteur optique (3) selon l'une des revendications précédentes,
**caractérisé en ce que** la première région de transmission (T1) du dispositif de formation d'image optique (15) présente un premier degré de transmission et **en ce que** ladite au moins une seconde région de transmission (T2) présente un second degré de transmission qui est inférieur au premier degré de transmission.

6. Dispositif de capteur optique (3) selon la revendication 5,
**caractérisé en ce que** le dispositif de formation d'image optique (15) présente une première rugosité de surface sur une face supérieure (17) par l'intermédiaire de laquelle le rayonnement solaire (4) pénètre dans le dispositif de formation d'image optique (15) et/ou sur une face inférieure (18) tournée vers l'élément récepteur sensible à la lumière (12) dans la première région de transmission (T1) pour obtenir le premier degré de transmission et présente une seconde rugosité de surface supérieure à la première rugosité de surface dans ladite au moins une seconde région de transmission (T2) pour obtenir le second degré de transmission.

7. Dispositif de capteur optique (3) selon la revendication 6,
**caractérisé en ce que** la face supérieure (17) et/ou la face inférieure (18) du dispositif de formation d'image optique (15) est polie de manière à ce qu'elle soit lisse dans la première région de transmission (T1) pour obtenir la première rugosité de surface et **en ce qu'**elle est rendue rugueuse dans au moins une seconde région de transmission (T2) pour obtenir la seconde rugosité de surface.

8. Dispositif de capteur optique (3) selon l'une des revendications précédentes,
**caractérisé en ce que** le dispositif de capteur optique (3) comporte un autre élément de réception sensible à la lumière (13) destiné à détecter la puissance de rayonnement afin de déterminer une puissance de rayonnement du rayonnement solaire (4) incident sur un passager se trouvant dans le véhicule automobile (1) et un autre dispositif de formation d'image optique (22), dans lequel l'autre élément récepteur sensible à la lumière (13) présente une sensibilité dépendant de l'angle d'incidence et l'autre dispositif de formation d'image optique (22) est conçu pour faire varier en fonction de l'angle d'incidence la puissance de rayonnement afin de compenser la sensibilité de l'autre élément récepteur sensible à la lumière (13) en fonction de l'angle d'incidence lors de la transmission, de manière à ce que la puissance de rayonnement détectée par l'élément récepteur photosensible (13) après la transmission soit indépendante de l'angle d'incidence dans l'autre plage d'angles d'incidence prédéterminée.

9. Dispositif de capteur optique (3) selon l'une des revendications précédentes, **caractérisé en ce que** le dispositif de capteur optique (3) comprend un capteur de pluie (21) destiné à détecter une précipitation sur une vitre (6) du véhicule automobile (1).

10. Système d'aide à la conduite (2) comportant un dispositif de capteur optique (3) selon l'une des revendications précédentes.

11. Système d'aide à la conduite (2) selon la revendication 10, **caractérisé en ce que** le système d'aide à la conduite (2) comporte un dispositif de climatisation (7) et **en ce qu'**un dispositif de commande du système d'aide à la conduite (2) est conçu pour commander le dispositif de climatisation (7) en fonction de la puissance de rayonnement détectée.

12. Véhicule automobile (1) comportant un système d'aide à la conduite (2) selon la revendication 10 ou 11.
